# EUROPEAN PATENT APPLICATION

(11) **EP 2 623 403 A1**
(43) Date of publication of application: **07.08.2013**
(21) Application number: 13152248.4
(22) Date of filing: 22.01.2013
(51) Int. Cl.: B62J 1/16, B62J 11/00

(54) **Fastening device for a child seat on a frame of a bicycle**

(30) Priority: 03.02.2012 IT MI20120147
(71) Applicant: OKBABY S.R.L., 24060 Telgate (Bergamo) (IT)
(72) Inventor: Baldelli, Gian Battista, 24060 TELGATE (BG) (IT)
(74) Representative: Galassi, Alessandro

(57) **Abstract**

A fastening device (1) for assembling a child seat on a frame of a bicycle, comprising a support body (2) exhibiting at least a blocking portion (3) configured for stably engaging a support frame of the child seat, a contact portion configured for abutting against a portion of the frame of the bicycle, a first constraining element (6) configured for constraining the support body (2) to the frame of the bicycle and which exhibits a first portion (7) engaged to the support body (2) and a second portion (8) engageable to a portion of the frame of the bicycle wherein the first constraining element (6) being mobile with respect to the support body (2) between at least a first and at least a second operating position defining reciprocally angularly offset positions of the first constraining element (6).

## Description

### FIELD OF THE INVENTION

The present invention relates to a device for mounting a child seat on a bicycle frame. The invention is for example applicable on seats that can be attached to bicycle frames for the transport of persons, in particular children.

### STATE OF THE ART

Up to now, child seats are generally fixed to the frame of a two-wheeled vehicle, such as a bicycle or the like, by means of fastening devices which anchor the seat to the handlebar or the bicycle frame. Since for safety reasons the devices including the anchoring of the seat to the frame rather than the handlebar are preferred, only this preferred type of device will be considered in the following description.

Fastening devices of known type are constituted by a body made of metal or plastic material which exhibits a rest portion that is at least partially counter-shaped to the portion of frame of the bicycle to which the device is to be engaged: in this way a large contact area between the frame and the device is guaranteed, with the aim of improving the adherence between the two. These devices further comprise a constraining portion configured such as to block the seat in a predetermined position.

The fixing of the body to the bicycle frame is guaranteed by blocking elements engaged at a side to the body of the device and on the other side to the bicycle frame: in this way the blocking elements enable, following the blocking of the body, fastening of the seat on the bicycle frame. A first example, described in document WO 01/32498 A1, concerns a fastening device exhibiting a curved contact surface for abutting to the frame of a bicycle. The device further comprises two wire-shaped fastening elements engaged to the body and defining therewith a housing compartment able to accommodate a portion of the bicycle frame. The movement of the body with respect to the frame enables varying the dimension of the housing compartment defined by the fastening elements and consequently blocking the device on the bicycle frame. The body further comprises a blocking portion able to receive and block a child seat.

The type of fastening device described above exhibits some drawbacks. For example, the above-described fastening device is limitedly positionable on the bicycle frame and limitedly adjustable, and is further poorly reliable and resistant in structural terms.

A second example, described in EP 2.159.139 A1, concerns a fastening device of a child seat to a bicycle frame, which exhibits a first substantially-vertical tubular element, comprising a plate associable to a tubular element of the bicycle frame and able to support a child seat.

The fastening device further comprise two fastening elements having a tubular shape and defining a substantially open profile. These elements are associable to the plate such as to define therewith a housing zone interposed between the fastening elements and the plate. The device further comprises removable blocking means of the fastening elements to the plate such as to block the plate with respect to the frame.

This above-described fastening element is also not without drawbacks. In particular, the device is also adjustable, for adapting to the bicycle frame, but only within certain limits as it is not adaptable to any type of frame. Further, the adjustment of the fastening device is especially laborious and requires the use of special tools. In fact, in order to carry out various types of adjustment it is often necessary to remove the fastening elements from the body; this is an operation that complicates the adjusting manoeuvres of the fastening device.

### AIM OF THE INVENTION

A first aim of the invention is to obviate one or more of the limitations and drawbacks of the preceding solutions.

A further aim of the present invention is to disclose a fastening device which exhibits a simple and sturdy structure.

A further aim of the present invention realizes a fastening device which is simple and rapid to use.

A further aim of the present invention is to provide a fastening device offering a high degree of stability of the seat.

A further aim of the present invention is to disclose a fastening device that offers a high degree of safety in use for the users of the seat.

A further aim of the present invention is to disclose a fastening device which avoids risking a wrong or not optimal fastening of the seat.

It is further an aim of the present invention to realise a fastening device which is simple and economical to manufacture.

A further aim of the present invention is to realize a fastening device that is easily adjustable with respect to the frame it is associated to, and in particular applicable and adaptable to a high number of cycles and frames.

One or more of the above-described aims, which will better emerge during the course of the following description, are substantially attained by a fastening device according to one or more of the appended claims.

Specific aspects of the invention are described in the following.

A first aspect comprises a fastening device (1) for assembling a child seat (100) on a frame (101) of a cycle (102), said seat (100) being of a type comprising a support frame (103) engaging a seat part (104) extending substantially along a development plane (105) and a backrest (106), the device comprising:
➢ a support body (2) exhibiting at least a blocking portion (3) configured for stably engaging the support frame (103) of the seat (100) and at least a contact portion (4) configured for abutting against a portion of the frame (101) of the bicycle (102),
➢ at least a first constraining element (6) configured for constraining the support body (2) to the frame (101) of the bicycle (102), said first constraining element (6) having a first portion (7) that is movably engaged to the support body (2) and at least a second portion (8) that is engageable to a portion of the frame (101) of the bicycle (102), said first constraining element (6) being mobile with respect to the support body (2) between at least a first and at least a second operating position;
   the first operating position and the second operating position define reciprocally angularly offset positions of the first constraining element (6).

In a 2nd aspect according to the preceding aspect the first constraining element (6) is rotatably movable about a rotation axis (9) that is substantially parallel to the main development plane (105) of the seat part (104).

In a 3rd aspect according to any one of the preceding aspects the first constraining element (6) is rotatably mobile about a rotation axis (9) that is substantially parallel to a substantially horizontal plane in the use condition of the fastening device (1).

In a 4th aspect according to any one of the preceding aspects the first constraining element (6) is rotatably mobile about a rotation axis (9) that is substantially perpendicular to a main development direction of the portion of frame (101) of the cycle (102).

In a 5th aspect according to any one of the preceding aspects the support body (2) comprises a first engaging portion (5) engaging and cooperating with the first portion (7) of the first constraining element (6) and defining therewith a hinge-type constraint.

In a 6th aspect according to the preceding aspect the first engaging portion (5) of the support body (2) has a profile that is at least partly arched and suitable for cooperating with the first portion (7) of the first constraining element (6).

In a 7th aspect according to any one of the preceding aspects the first portion (7) exhibits a profile that is at least partly arched.

In an 8th aspect according to the preceding aspect the first portion (7) exhibits a profile that is at least partly counter-shaped with respect to the first engaging portion (5).

In a 9th aspect according to any one of aspects from 5 to 8, the first engaging portion (5) of the support body (2) comprises a seating having a profile that is at least partly arched while the first portion (7) of the first constraining element (6) comprises at least a pin or at least a ball.

In a 10th aspect according to any one of aspects from 5 to 8, the first engaging portion (5) of the support body (2) comprises at least a pin or at least a ball while the first portion (7) of the first constraining element (6) comprises at least a seating having a profile that is at least partly arched.

In an 11th aspect according to any one of aspects from 5 to 9, the first engaging portion (5) of the support body (2) comprises at least a seating extending along a main development direction parallel to the rotation axis (9) of the first constraining element (6).

In a 12th aspect according to the preceding aspect the seating of the first engaging portion (5) of the support body (2) exhibits an at least partly-arched profile, and wherein the first portion (7) of the first constraining element (6) comprises at least a pin engaged internally of the seating and having a cylindrical symmetry about an axis of symmetry (10).

In a 13th aspect according to the preceding aspect the main development direction of the seating of the first engaging portion (5) of the support body (2) is substantially parallel to the axis of symmetry (10) of the pin of the first portion (7).

In a 14th aspect according to any one of the preceding aspects, the second portion (8) of the first constraining element (6) comprises at least a first tract (15) that is at least partly straight and develops between a first end (16) and a second end (17), the second portion (8) of the first constraining element (6) further comprising at least a second tract (18) that is at least partly curved and extends between a respective first end (19) and second end (20), the first tract (15) and the second tract (18) being connected to one another respectively at said second end (17) and said first end (19) and defining a coupling seating (21) suitable for contacting at least a portion of the support frame (101) of the bicycle (102).

In a 15th aspect according to any one of the preceding aspects, the first constraining element (6) is further movable for adjusting a dimension of an engaging zone (25) suitable for accommodating at least a portion of the frame (101) of the bicycle (102) and defined between said first constraining element (6) and said support body (2).

In a 16th aspect according to aspects from 2 to 15, the first constraining element (6) is further slidingly movable with respect to the support body (2) along an adjusting direction transversal to the rotation axis (9) of the first constraining element (6).

In a 17th aspect according to any one of aspects from 14 to 16, the first constraining element (6) is further slidingly movable with respect to the support body (2) along an adjusting direction transversal to the rotation axis (9) of the first constraining element (6) such as to vary the distance between the second tract (18) of the second portion (8) and the support body (2).

In an 18th aspect according to the preceding aspect the regulating direction of the first constraining element (6) is parallel to the development direction of the first tract (15) of the second portion (8).

In a 19th aspect according to any one of aspects from 14 to 18 the second portion (8) of the first constraining element (6) comprises a third tract (22) at least partly straight and developing substantially parallel to said first tract between a respective first and second end (23, 24), the first end (23) of the third tract being connected with the second end (20) of the second tract (18).

In a 20th aspect according to the preceding aspect, the first, second and third tract (15, 18, 22) are connected to one another and define a substantially U-shaped element.

In a 21st aspect according to aspects 19 and 20, the first, second and third tract (15, 18, 22) are connected to one another such as to form a single body.

In a 22nd aspect according to any one of aspects from 19 to 21, at least one from among the first and third tract (15, 22) is removably and/or movably engaged to the first engaging portion (5) of the support body (2).

In a 23rd aspect according to any one of the preceding aspects, the first constraining element (6), in engagement with said support body (2), defines an engaging zone (25) suitable for accommodating at least a portion of the frame (101) of the bicycle (102).

In a 24th aspect according to the preceding aspect, the engaging zone (25) exhibits a closed containing profile.

In a 25th aspect according to aspects 23 or 24, a movement of the first constraining element (6) along a transversal sliding direction thereof with respect to the support body (2) determines a dimensional variation of the engaging zone (25).

In a 26th aspect according to any one of the preceding aspects, the first constraining element (6) substantially comprises a bar.

In a 27th aspect according to the preceding aspect the bar exhibits, in cross-section, a substantially circular and/or elliptical and/or polygonal profile.

In a 28th aspect the first constraining element (6) comprises a bar having, in cross-section, a substantially circular profile, the bar exhibiting, in a cross-section, a substantially constant area at least in a tract of development of the bar.

In a 29th aspect according to any one of the preceding aspects, the fastening device (1) comprises at least a second constraining element (26) configured for constraining the support body (2) to the frame (101) of the bicycle (102).

In a 30th aspect according to the preceding aspect, the second constraining element (26) having a respective first portion (27) engaged to the support body (2) and a second portion (28) engageable to a portion of the frame (101) of the bicycle (102).

In a 31st aspect according to aspects 29 or 30, the second constraining element (26) is movable with respect to the support body (2) or the second constraining element (26) is fixed with respect to the support body (2).

In a 32nd aspect according to any one of aspects from 29 to 31, the second constraining element (26) is movable between at least a first and at least a second operating position defining positions of the second constraining element (26) that are angularly offset to one another.

In a 33rd aspect according to the preceding aspect the second constraining element (26) is rotatably mobile about a rotation axis (29) that is substantially parallel to the main development plane (105) of the seat (104).

In a 34th aspect according to aspects 32 or 33, the second is rotatably movable about a rotation axis (29) that is parallel to a substantially horizontal plane in use conditions of the fastening device (1).

In a 35th aspect according to any one of aspects from 32 to 34, the second constraining element (26) is rotatably mobile about a rotation axis (29) that is substantially perpendicular to a main development direction of the portion of the frame (101) of the cycle (102).

In a 36th aspect according to any one of aspects from 33 to 35, the rotation axis (9) of the first constraining element (6) is substantially parallel to the rotation axis (29) of the second constraining element (26).

In a 37th aspect according to any one of aspects from 33 to 36, the rotation axis (9) of the first constraining element (6) and the rotation axis (29) of the second constraining element (26) substantially coincide or are distanced from one another.

In a 38th aspect according to any one of aspects from 30 to 37, the support body (2) comprises a second engaging portion (11) engaging and cooperating with the first portion (27) of the second constraining element (26) and defining therewith a hinge-type constraint.

In a 40th aspect according to the preceding aspect the second engaging portion (11) of the support body (2) has an at least partly arched profile suitable for cooperating with the first portion (27) of the second constraining element (26).

In a 41st aspect according to the preceding aspect the first portion (27) exhibits an at least partly arched profile counter-shaped to the second engaging portion (11) of the support body (2).

In a 42nd aspect according to any one of aspects from 38 to 41, the second engaging portion (11) of the support body (2) comprises a seating having an at least partly-arched profile while the first portion (27) of the second constraining element (26) comprises at least a pin or at least a ball, or wherein the second engaging portion (11) of the support body (2) comprises at least a pin or at least a ball while the first portion (27) of the second constraining element (26) comprises at least a seating having an at least partly-arched profile.

In a 43rd aspect according to any one of aspects from 38 to 42, the second engaging portion (11) of the support body (2) comprises at least a seating extending along a main development direction that is parallel to the rotation axis (29) of the second constraining element (26).

In a 44th aspect according to the preceding aspect the seating of the second engaging portion (11) of the support body (2) exhibits an at least partly-arched profile.

In a 45th aspect according to aspects 43 or 44, the first portion (27) of the second constraining element (26) comprises at least a pin engaged internally of the seating and having a cylindrical symmetry about an axis of symmetry (12).

In a 46th aspect according to the preceding aspect the main development direction of the seating of the second engaging portion (11) of the support body (2) is substantially parallel to the axis of symmetry (12) of the pin of the first portion (27) of the second constraining element (26).

In a 47th aspect according to any one of aspects from 30 to 46, the second portion (28) of the second constraining element (26) comprises at least a first at least partially-straight tract (30) developing between a first end (30) and a second end (32), the second portion (28) of the second constraining element (26) further comprising at least a second tract (33) at least partly curved and extending between a respective first and second end (34, 35), the first and the second tract (30 33) being connected to one another respectively at the second and first end (32, 34) and defining a coupling seating (36) suitable for contacting at least a portion of the support frame (101) of the cycle (102).

In a 48th aspect according to any one of aspects from 33 to 47, the second constraining element (26) is further slidingly mobile with respect to the support body (2) along an adjusting direction that is transversal to the rotation axis (29) of the second constraining element (26) such as to vary the distance between the second tract (28) of the second portion (28) and the support body (2).

In a 49th aspect according to the preceding aspect the adjusting direction of the second constraining element (26) is parallel to the development direction of the first tract (30) of the second portion (28) of the same second constraining element (26).

In a 50th aspect according to any one of aspects from 47 to 49, the second portion (28) of the second constraining element (26) comprises a third tract (37) that is at least partly straight and develops substantially parallel to the first tract (30) of the second constraining element (26) between a first and second ends (38, 39), the first end (38) of the third tract (37) being connected to the second end (35) of the second tract (28) of the second constraining element (26).

In a 51st aspect according to the preceding aspect the first, second and third tracts (30, 33, 37) of the second constraining element (26) are connected to one another and define an element substantially having a U-shape.

In a 52nd aspect according to aspects 50 or 51, the first, second and third tract (30, 33, 37) are connected to one another to form a single body.

In a 53rd aspect according to any one of aspects from 50 to 52, at least one of the first and third tracts (30, 37) of the second constraining element (26) is removably engaged to the second engaging portion (11) of the support body (2).

In a 54th aspect according to any one of aspects from 29 to 53, the second constraining element (26), engaging with the support body (2), defines an engaging zone (40) able to accommodate at least a portion of the frame (101) of the cycle (102).

In a 55th aspect according to the preceding aspect the engaging zone (40) defined between the second constraining element (26) and the support body (2) defines a closed containing profile.

In a 56th aspect according to aspects 54 or 55, the movement of the second constraining element (26) along the transversal sliding direction thereof enables dimensionally varying the engaging zone (40) defined between the second constraining element (26) and the support body (2).

Ina 57th aspect according to any one of aspects from 29 to 56, the second constraining element (26) substantially comprises a bar.

In a 58th aspect according to the preceding aspect the bar defined by the second constraining element exhibits, according to a transversal section, a substantially circular and/or elliptical and/or polygonal profile.

In a 59th aspect according to any one of aspects from 29 to 58, the second constraining element (26) comprises a bar having, in cross section, a substantially circular profile having a substantially constant area at least over a tract of the development of the bar.

In a 60th aspect according to any one of the preceding aspects the first and the second operating position of the first constraining element (6) exhibit an offset angle of greater than 30°.

In a 61st aspect according to any one of the preceding aspects, the first and the second operating position of the first constraining element (6) exhibit an offset angle of greater than 60°. In a 62nd aspect according to any one of the preceding aspects, the first and the second operating position of the first constraining element (6) exhibit an offset angle of greater than 90°. In a 63rd aspect according to any one of aspects from 29 to 62, the first and the second operating position of the second constraining element (26) exhibit an offset angle of greater than 30°.

In a 64th aspect according to any one of aspects from 29 to 63, the first and the second operating position of the second constraining element (26) exhibit an offset angle of greater than 60°.

In a 65th aspect according to any one of aspects from 29 to 64, the first and the second operating position of the second constraining element (26) exhibit an offset angle of greater than 90°.

In a 66th aspect a child seat (100) is provided for transport of persons on a bicycle (102), the bicycle being of a type comprising at least a frame (101), the child seat (100) comprising:
➢ a support frame (103),
➢ at least a seat part (104) engaged to the support frame (103) and extending substantially along a development plane (105),
➢ at least a back-rest (106) extending transversally with respect to the seat part (104),
➢ at least a fastening device (1) according to any one of the preceding claims, engaged to the support frame (103) and configured for being stably constrained to the frame (101) of the bicycle (102).

In a 67th aspect according to the preceding aspect, the support frame (103) of the child seat (100) is removably engaged to the blocking portion (3) of the fastening device (1).

In a further aspect, the invention further relates to a device for mounting an object-carrying element or another device on a bicycle frame, the device having the structural characteristics as defined in the accompanying claims.

### BRIEF DESCRIPTION OF THE DRAWINGS

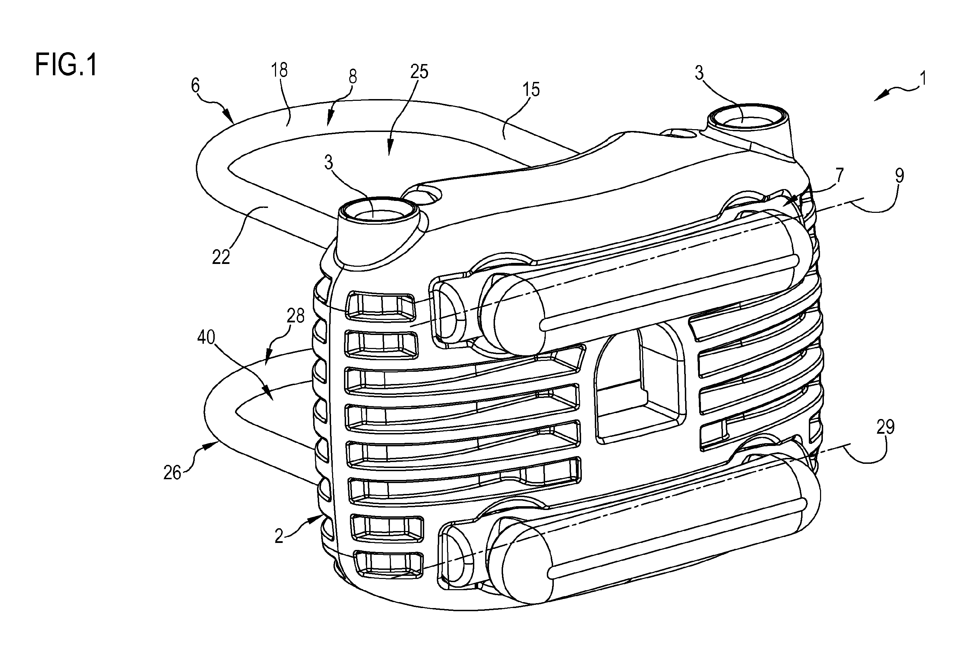

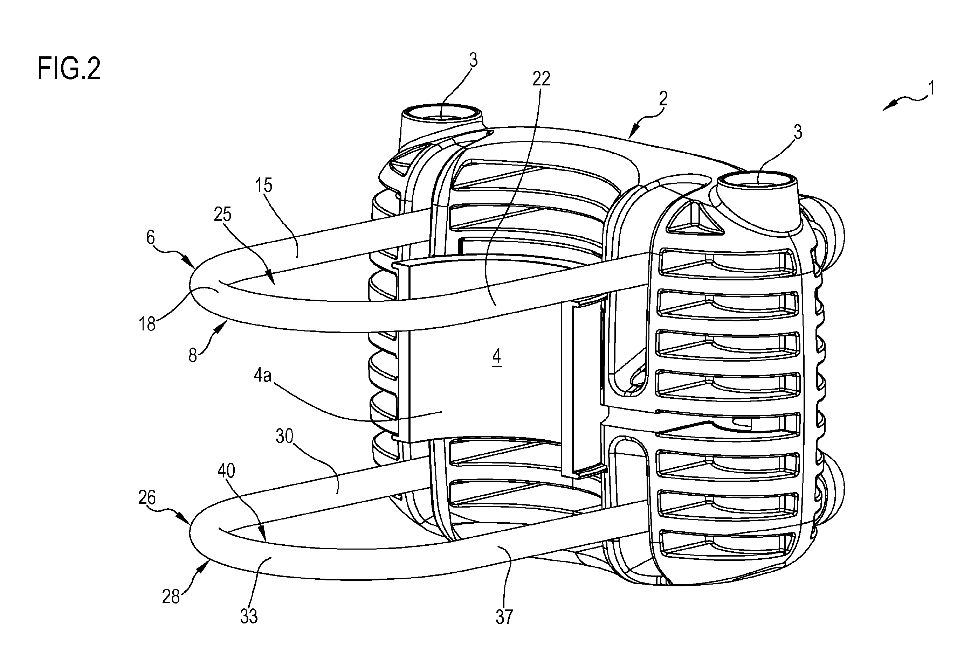

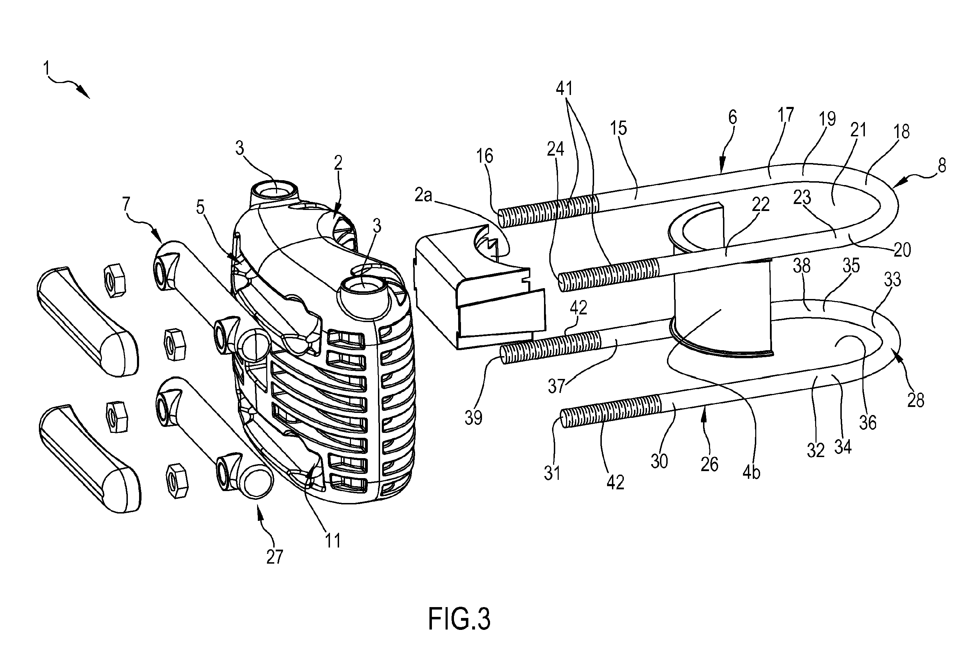

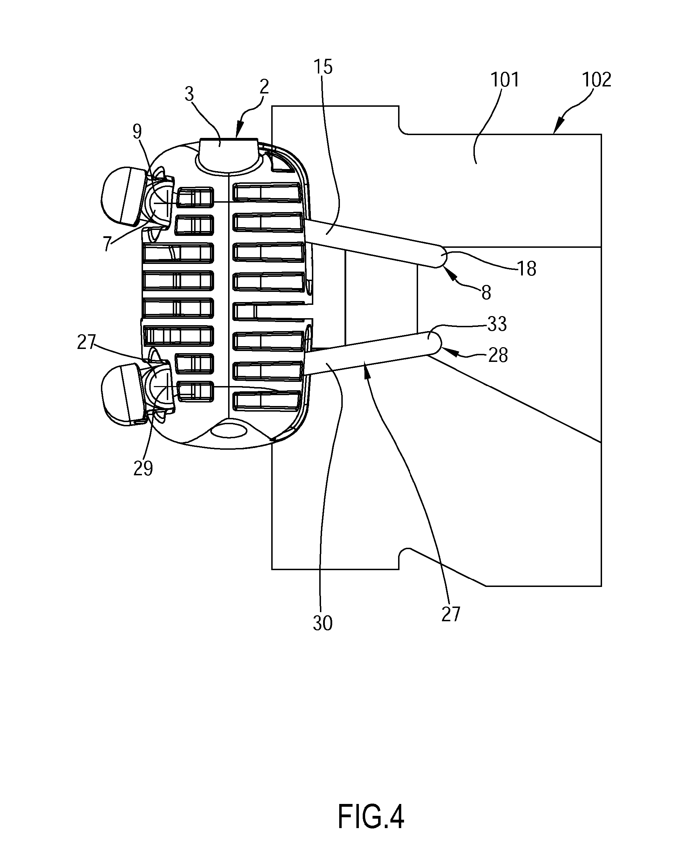

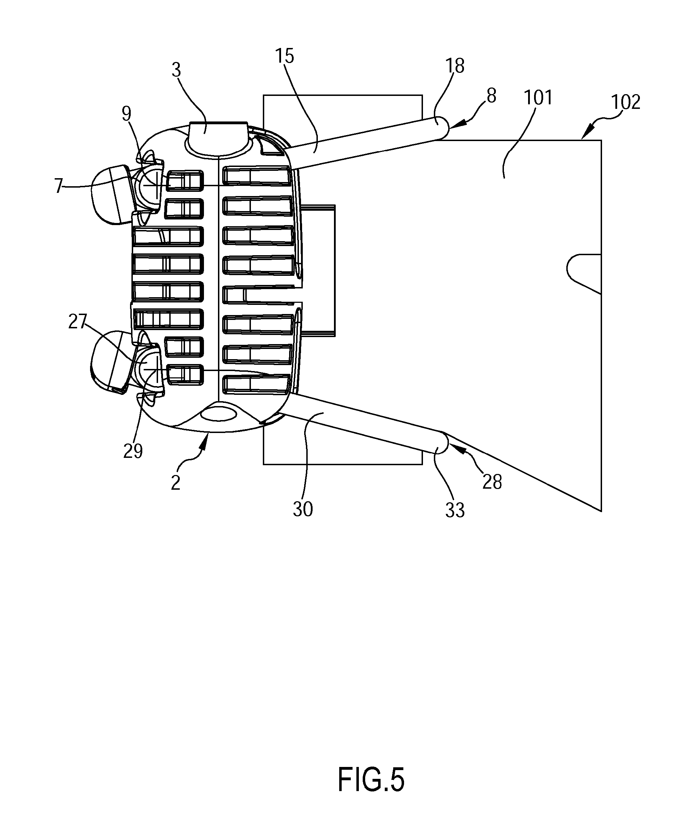

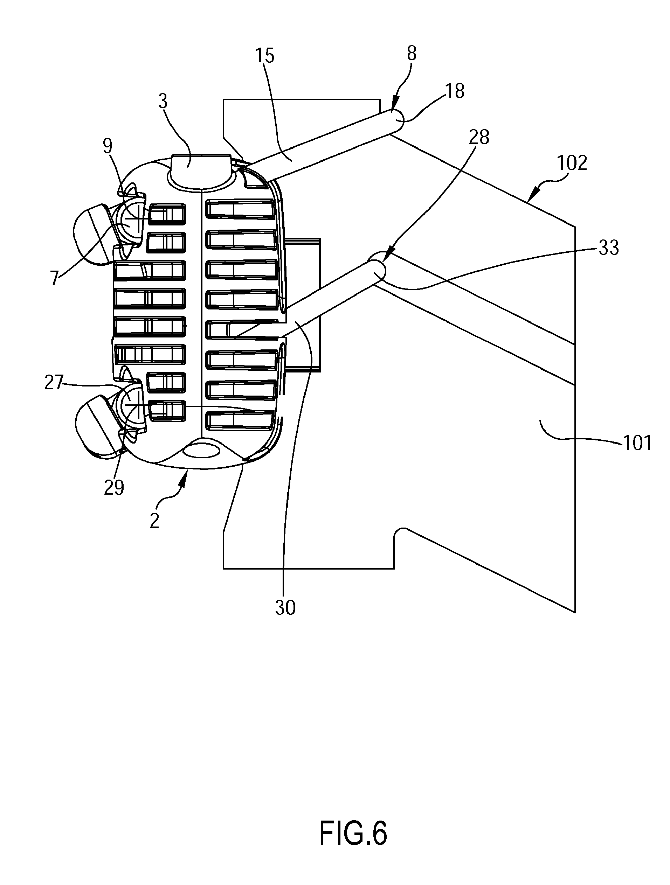

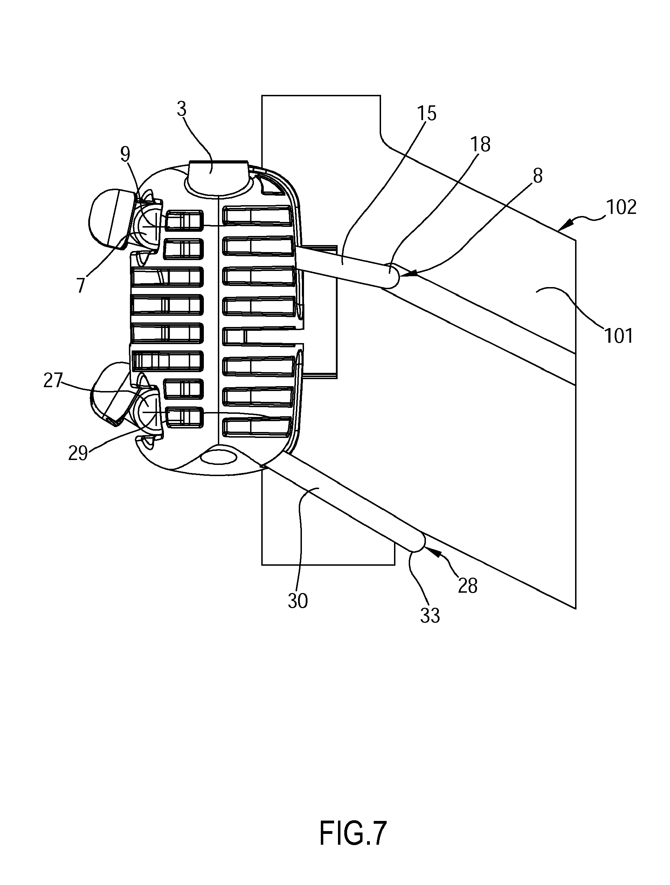

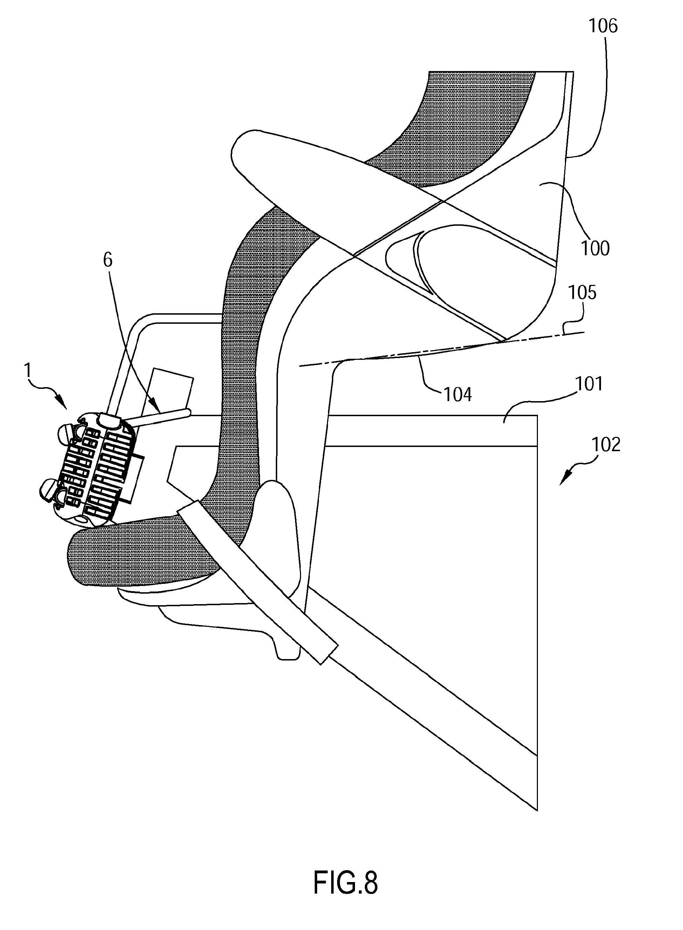

Some embodiments and some aspects of the invention will be described in the following with reference to the accompanying drawings, provided purely by way of non-limiting example, in which:
➢ figure 1 is a perspective view of a fastening device according to an embodiment of the invention;
➢ figure 2 is a further perspective view of the fastening device of figure 1;
➢ figure 3 is an exploded view of the fastening device of figure 1 and 2;
➢ figure 4 is a lateral view illustrating the fastening device of figure 1 in a first operating condition;
➢ figure 5 is a lateral view illustrating the fastening device of figure 1 in a second operating condition;
➢ figure 6 is a lateral view illustrating the fastening device of figure 1 in a third operating condition;
➢ figure 7 is a lateral view illustrating the fastening device of figure 1 in a fourth operating condition;
➢ figure 8 is a lateral view of a child seat mounted on a frame of a bicycle according to an embodiment of the present invention.

### DETAILED DESCRIPTION

With reference to the accompanying figures of the drawings, 1 denotes in its entirety a fastening device for mounting a seat 100 on a portion of a frame 101 of a bicycle 102.

In the figures, the mounting of the fastening device 1 on a bicycle frame is non-limitingly illustrated. However, the fastening device 1 can also be applied on other bicycles, such as for example motor vehicle having two or three wheels. The fastening device 1 is able to engage at least a child seat 100 of a type comprising at least a support frame 103 engaging a seat part 104 extending substantially along a development plane 105, and a backrest 106.

The fastening device 1 is essentially constituted by a support body 2 and at least a constraining element (6, 26): the cooperation between the support body 2 and the at least a constraining element 6, 26 enables constraining the fastening device 1 and consequently the child seat on at least a portion of the frame 101 of the cycle 102. In greater detail, the support frame 101 of the cycle is engaged by being interposed between the support body 2 and the constraining element 6, 16. The support body represents the structural support part of the support frame 103 of the child seat 100.

The figures illustrate an embodiment of the support body 2 having a substantially polyhedral shape, in particular a parallelepiped shape having, non-limitingly, a dimension, in particular the thickness, that is smaller with respect to the other two dimensions. In fact, the support body 2 illustrated in the figures exhibits an approximately plate-shaped form in which one of the surfaces defining the length and the width of the body 2 faces the portion of the frame 101 of the cycle 102.

Alternatively the support body 2 can exhibit a substantially spherical or elliptical shape (conditions that are not illustrated in the accompanying figures) or another form suitable for the purpose.

Note that the shape, dimension and material must enable the seat 100 to be supported in total safety and must also resist the forces impressed by the frame 101 of the cycle 102. In fact, the support body 2 can be realized at least partially of plastic and/or metal material. For example, the support body 2 can be made of nylon or glass-reinforced nylon or aluminium.

As can be seen from the accompanying figures, the support body 2 comprises at least a blocking portion 3 configured such as to engage stably with the support frame 103 of the seat 100: in this way the support body 2 can be constrained to the frame 101 and consequently to the seat 100. The figures non-limitingly illustrate a blocking portion 3 constituted by two holes engaging two bars of the support frame 101 (figure 8). The blocking device 3 of the support body 2 essentially comprises a blocking/unblocking device of the support frame 101 of known type for a technical expert in the sector.

The support body 2 further comprises a contact portion 4 able to abut the portion of the support frame 101 of the cycle 102. In fact, the contact portion 4 of the support body 2 represents the part resting on the frame 101. In particular, the contact portion 4 exhibits a first surface 4a having a shape, non-limitingly, at least partially counter-shaped to the portion of the frame 101 to which the fastening device 1 is engaged.

The figures non-limitingly illustrate a configuration of the contact portion 4 exhibiting a first surface 4a defining a semicircular-developing profile able to abut a cylindrical tubular portion having of the frame 101 of the cycle: in this condition the first surface 4a of the contact portion 4 is totally supported to the portion of the frame 101.

The contact portion 4 can advantageously be realized using an easily-deformable material and/or an elastic material such that at least a part of the contact portion 4 can adapt to the shape of the portion of the frame 101 of the cycle 102. For example, the contact portion 4 can be realized with elastomer materials such as rubber. As schematically illustrated in figure 3, the contact portion 4 can be removably engaged to the support body 2 or alternatively can constitute therewith a single body. In a case in which the contact portion 4 is removably engaged to the support body 2, the portion 4 further exhibits a second surface 4b opposite the first surface 4a and able to abut a rest surface 2a of the support body 2.

Considering this last condition, in which the contact portion 4 is removably engaged to the support body, various different types/modules of interchangeable contact portion 4 can be realized, each of which is especially suited to a type of portion of frame 101. In fact, it is possible to maintain the shape of the second surface 4b engaged with the support body 2 unchanged, and vary, according to the module, the shape of the first surface 4a.

This configuration would be particularly advantageous as, by means of the contact portion, with a single support body 2 an optimal support can be realised on the frame 101. The removability of the contact portion 4 further enables changing it in a case, for example, of breakage or wear of the part.

As previously mentioned, the fastening device 1 comprises at least a constraining element 6, 26 cooperating with the support body 2 such as to enable the engaging of the fastening device 1 on a portion of the frame 101. In particular, in the figures a configuration of the fastening device 1 is illustrated that exhibits at least a first constraining element 6 and at least a second constraining element 26, both engaged to the support body 2.

Alternatively the fastening device 1 might comprise only the first constraining element 6. The constraining elements are configured such as to engage a portion of the frame 101 and consequently constrain the support body 2 to the frame 101. Returning to the description of the support body 2, it can be observed that it comprises at least a first engaging portion 5 configured such as to removably engage the first constraining element 6.

The first engaging portion 5 is configured such as to enable the first constraining element 6 to move between at least a first and a second operating position, angularly offset to one another. In particular, the first engaging portion 5 is configured such as to define, with the first constraining element 6, at least a hinge-type constraint such that it can rotate in relation to the support body 2 about a rotation axis 9 parallel to the development plane of the seat and/or parallel to a substantially horizontal plane in use conditions of the fastening device 1 and/or substantially perpendicular to a main development direction of the frame portion 101 of the cycle 102.

More in detail, the first constraining element 6 can define an offset or rotation angle between the first and second operating position of greater than 30°, in particular greater than 60°, still more in particular greater than 90°.

As can be seen in figure 3, the first engaging portion 5 comprises, non-limitingly, a seating developing along a direction defining the width of the support body 2. In the example, the seating develops along the rotation axis of the first constraining element 6 and exhibits an at least partially arched profile extending, non-limitingly, along the whole development of the seating. In fact, the seating defines a housing compartment having a semicircular profile able to guide the rotation of the first constraining element 6. In the embodiment illustrated in the figures, the support body 2 further comprises at least a second engaging portion 11 able to engage a second constraining element 26 which will be more fully described in the following.

The second engaging portion 11 is also configured such as to removably engage the second constraining element 26 and thus enable the second constraining element 26 to move relatively to the support body 2. The second engaging portion 11 of the support body 2 is distanced from the first engaging portion 5 thereof. In fact, as with the first engaging portion 5, the second engaging portion 11 defines, with the second constraining element 26, a hinge-type constraint such that the second constraining element 26 can rotate about a respective rotation axis 29 distanced from the rotation axis 9 of the first constraining element 6. The rotation axis 29 of the second constraining element 26 is also parallel to the development plane 105 of the seat 104 and/or parallel to a substantially horizontal plane in use condition of the fastening device 1 and/or substantially perpendicular to a main development direction of the portion of frame 101 of the cycle 102.

In detail, the rotation axis 29 of the second constraining element 26 is parallel to the rotation axis 9 of the first constraining element 6. In more detail, the second constraining element 26 can define an offset angle, between the first and the second operating position, of greater than 30°, in particular greater than 60°, still more in particular greater than 90°. The second engaging portion 11 also exhibits, non-limitingly, a seating developing along a direction defining the width of the support body 2. In the example, the seating develops along the rotation axis 29 of the second constraining element 26 and exhibits an at least partially arched profile extending, non-limitingly, along the whole development of the seating of the second engaging portion 11. In fact the seating defines a housing compartment having a semicircular profile able to guide the rotation of the second constraining element 26.

In an alternative embodiment, the second engaging portion 11 can be configured such as to enable the second constraining element 26 to make a translatory movement along a transversal direction to the rotation axis 29 of the second constraining element 26. In particular, the translation can take place long a vertical direction, in use condition of the seat, and in particular substantially parallel to a main development plane of the backrest 106 of the seat 100. In a further configuration, the seating of the second engaging portion 11 can be configured such as to fix the second constraining element 26 to the support body 2 such that the second constraining element 26, engaged to the support body 2, is not mobile with respect thereto.

As previously described, the fastening device 1 comprises at least a first constraining element 6 configured such as to constrain the support body 2 to the frame 101 of the cycle 102. This first constraining element 6 exhibits a first portion 7 that is movably engaged to the support body 2, in particular to the first engaging portion 5 of the support body 2, and at least a second portion 8 engageable to a portion of the frame 101 of the bicycle 102.

The first constraining element 6 is mobile with respect to the support body 2 between at least a first and at least a second operating position, angularly offset to one another. As can be seen from the figures, the first portion 7 of the first constraining element 6 exhibits an at least partially-arched profile which is also counter-shaped to the first engaging portion 5: the shape enables defining, with the first engaging portion 5, the hinge-type constraint such that the first constraining element 6 is rotatably mobile about the rotation axis 9 with respect to the support body 2.

In greater detail, the first portion 7 of the first constraining element 6 comprises a pin engaged internally of the seating defined by the first engaging portion of the support body 2. The pin substantially exhibits a cylindrical symmetry about an axis of symmetry 10. The cylindrical axis of symmetry 10 is parallel to the rotation axis 9 of the first constraining element 9, in particular coincides therewith. In the illustrated embodiment, the pin of the first portion 7 extends over all the length of the seating defined by the first engaging portion 5.

Alternatively, the first portion 7 of the first constraining element 6 can comprise at least a ball able to rotate internally of the first engaging portion 5 of the support body 2. The second portion 8 of the first constraining element 6 constitutes the part thereof in contact with the frame 101 of the cycle 102. In particular, the second portion is able to define a coupling seating 21 able to engage the frame 101 and therefore constrain the body 2 to the frame 101. From a structural point of view, the second portion 8 comprises at least a first tract 15 that is at least partly straight developing between a first and a second end 16, 17.

In correspondence of the first end 16, the second portion 8 engages the first portion 7 of the first constraining element 6. The first tract 15 of the second portion 8 is arranged transversally, in particular perpendicularly, to the rotation axis 9 of the first constraining element 6. The first tract 15 then extends distancingly from the first portion 7, in particular nearingly to the frame 101 of the cycle 102. The second portion 8 further comprises at least a second tract 18 that is at least partly curved, extending between a respective first and second end 19, 20: the first and the second tract 15, 18 of the second portion 8 are connected to one another respective at the second and first end 17, 19. The second portion 8 of the first constraining element 6 can, as visible from the embodiment schematically illustrated in the accompanying figures, further exhibit a third tract 22 at least partially straight and developing substantially parallel to the first tract 15 between a respective first and second end 23, 24; the first end 23 of the third tract 22 is connected to the second end 20 of the second tract 18.

In correspondence of the second end 24, the third tract 22 also engages the first portion 7 of the first constraining element 6. In this way the first, second and third tract 15, 18, 22 are connected to one another such as to define a substantially U-shaped element. As illustrated, the first, second and third tracts 15, 18, 22 are non-limitingly connected to one another such as to form a single body. The second portion 8 engages the first portion 7 such as to define an engaging zone 25 able to contain the portion of the frame 101 of the cycle 102.

At least one of the first and third tract 15, 22 advantageously comprises adjusting means 41 able to engage the second portion 8 to the first portion 7 of the first constraining element 6. In the illustrated embodiment, each of the first and third tract 15, 22 comprises the adjusting means 41. The adjusting means 41 are non-limitingly configured such as to define a reversible coupling between the first and the second portion 8 such that the portions can be easily demountable and/or adjustable.

In greater detail, the adjusting means 41 comprise for example a threading able to cooperate with a respective threaded portion of the first portion 7.

The adjusting means 41 are configured such as to enable movement of the first constraining element 6 along a transversal sliding direction parallel to the development direction of the first and third tract 15, 22. In greater detail, the first constraining element 6, apart from rotating with respect to the rotation axis 9 relative to the support body 2, can slide with respect thereto along the development of the first and third tract 15, 22: the sliding enables dimensional variation of the engaging zone 25.

The last above-described configuration can enable, during the engagement between the frame and the fastening device 1, the blocking of the support body 2, and consequently of the child seat 100, to the frame 101.

The first constraining element 6 substantially comprises a bar having, in cross-section, a substantially circular profile. The bar exhibits, in a transversal section, a substantially constant area at least over a tract of the development of the bar.

As described herein above, the fastening device 1 can further comprise at least a second constraining element 26 configured such as to constrain the support body 2 to the frame 101 of the cycle 102. In the illustrated embodiment, the second constraining element 26 substantially exhibits the same characteristics as the first constraining element 6. In greater detail, the second constraining element 26 exhibits a first portion 27 movably engaged to the support body 2, in particular to the second engaging portion 11 of the support body 2, and at least a second portion 28 engageable to a portion of the frame 101 of the bicycle 102.

The second constraining element 26 is mobile with respect to the support body 2 between at least a first and at least a second operating position angularly offset to one another. As can be seen from the accompanying figures of the drawings, the first portion 27 of the second constraining element 27 of the second constraining element 26 exhibits an at least partly-arched profile counter shaped to the second engaging portion 11: this shape enables defining there-with a hinge-type constraint such that the second constraining element 26 is rotatably mobile about the rotation axis 29 with respect to the support body 2.

In greater detail, the first portion 27 of the second constraining element 26 comprises a pin engaged internally of the seating defined by the second engaging portion 11 of the support body 2. The pin substantially exhibits a cylindrical symmetry about a cylindrical axis of symmetry 12. The cylindrical axis of symmetry 12 is parallel to the rotation axis 12 of the second constraining element 26, in particular coinciding there-with. In the illustrated embodiment the pin of the first portion 27 of the second constraining element 26 extends over the whole length of the seating defined by the second engaging portion 11 of the support body 2. Alternatively, the first portion 27 of the second constraining element 26 can comprise at least a ball able to rotate internally of the second engaging portion 11 of the support body 2.

The second portion 28 of the second constraining element 26 constitutes the part thereof in contact with the frame 101 of the cycle 102. In particular, the second portion 28 is able to define a coupling seating 36 able to engage the frame 101 and therefore constrain the body 2 to the frame 101. From a structural point of view, the second portion 28 of the second constraining element 26 comprises at least a first tract 30 at least partly straight and developing between a first and a second end 31, 32.

In correspondence of the first end 31, the second portion 28 engages the first portion 27 of the second constraining element 26. The first tract 30 of the second portion 28 is transversally arranged, in particular perpendicularly, to the rotation axis 29 of the second constraining element 26. In fact the first tract 30 extends distancingly from the first portion 27 and in particular nearingly to the frame 101 of the cycle 102. The second portion 28 further comprises at least a second tract 33 at least partly curved and extending between a respective first and second end 34, 35: the first and the second tract 30, 33 of the second portion are connected to one another respectively at the second and first ends 32, 34. The second portion 28 of the second constraining element 26 can, as can be seen from the schematically-illustrated embodiment of the figures, further exhibit a third tract 37 at least partly straight and developing substantially parallel to the first tract 30 between a respective first and second end 38, 39: the first end 38 of the third tract 37 is connected to the second end 35 of the second tract 33.

The third tract 37 also engages, at the second end 39 thereof, the first portion 27 of the second constraining element 26. In this way the first, second and third tract 30, 33, 37 are connected to one another such as to define an element substantially having a U-shape. As schematically and illustrated, the first, second and third tracts 30, 33, 37 are non-limitingly connected to one another such as to form a single body.

The second portion 28 engages the first portion 27 of the second constraining element 26 such as to define an engaging zone 40 able to contain the portion of the frame 101 of the cycle 102. At least one from between the first and third tract 30, 37 advantageously comprises adjusting means 42 able to engage the second portion 28 to the first portion 27 of the second constraining element 26.

In the illustrated embodiment each of the first and third tracts 30, 37 comprises the adjusting means 42. The adjusting means 42 are configured such as to non-limitingly define a reversible coupling between the first and second portion 27, 28 of the second constraining element 26 such that the portions can be easily demountable and/or adjustable. In greater detail, the adjusting means 42 comprise a threading able to cooperate with a respective threaded portion of the first portion 27. The adjusting means 42 are configured such as to enable moving the second constraining element 26 along a transversal sliding direction parallel to the development direction of the first and third tract 30, 37. In still greater detail, as well as rotating about the rotation axis 29 with respect to the support body 2, the second constraining element 26 can slide with respect to the support body 2 along the development of the first and third tracts 30, 37: this sliding enables a dimensional variation of the engaging zone 40.

The last above configuration can enable, during engagement between the frame and the fixing device 1, the blocking of the support body 2, and consequently of the seat 100 to the frame 101. The second constraining element 26, as well as the first constraining element 6, non-limitingly comprises substantially a bar having, in cross-section, a substantially circular profile. In cross section, the bar exhibits a substantially constant area at least over a tract of the development of the bar itself.

As previously described, the second constraining element can be fastened to the support body or can be constrained to the support body such as to translate with respect thereto along a transversal translation direction, in particular perpendicular, to the rotation axis 9 of the first constraining element 6. In fact, in the last-described embodiment, the second engaging portion 11 of the support body 2 can comprise at least a slot extending transversally, in particular perpendicularly, to the rotation axis 9 of the first constraining element 6.

In the last above configuration, not illustrated, the first constraining element 6 can at least rotate about the rotation axis 9 thereof while the second constraining element 26 can at least slide with respect thereto along a regulating direction enabling a nearing or distancing of the second constraining element 26 from the first constraining element 6.

With reference to the figures, 100 overall denotes a seat for transport of persons, in particular children, on a cycle 102. The seat 100 comprises a support frame 103 which engages and supports at least a seat part 104 extending substantially along a development plane 105 and at least a backrest 106 extending transversally with respect to the seat part. The seat 100 further comprises at least a fastening device 1 engaged to the support frame 103 by means of the blocking portion 3 and configured such as to be constrained stably to the frame 101 of the cycle 102.

### FUNCTIONING

The present invention functions as follows.

With the support body 2 positioned resting with the contract portion 4 on the portion of frame 101, at least the first constraining element 6 is positioned with respect to the support body 2. In greater detail, the first constraining element 6 is orientated with respect to the support body 2 and arranged in a position comprised between the first and the second operating positions, such that the second portion 8 of the first constraining element 6 can insert into or engage with the portion of the frame 101. The constraining element 6 is then adjusted using the adjusting means 41. Figures from 4 to 7 illustrate various conditions of the fastening device 1 comprising a first and a second constraining element 6, 26. The presence of the first and second constraining elements 6, 26 are such that during the progressive blocking of the respective adjusting means 41, 42 a nearing of the support body 2 to the frame 101 is obtained, and in particular a reduction of the engaging zones 26, 40 respectively defined by the first and second constraining element 6, 26 in cooperation with the support body 2: in this way there is an increase in the adhesion of the support body 2 to the frame 101. The position of the constraining elements can be freely adjusted such as to adapt the device to a wide variety of cycle frames, even those having various transversal elements arranged even transversally to one another.

The invention as it is conceived is susceptible to numerous modifications and variant, all falling within the scope of the appended claims. Further, all the details can be replaced with other technically-equivalent elements. In practice, the materials used, and the contingent dimensions, can be any according to needs, without forsaking the protective scope of the following claims.

### ADVANTAGES OF THE INVENTION.

Obviously it can immediately be understood how the fastening device 1 can easily by demounted from the frame 101 and applied to different vehicles, by newly performing the operations described above, i.e. by re-positioning the constraining elements 5 and 26 with respect to the support body 2.

In practice it has been observed that the invention described herein attains the set aims and in particular it is stressed that the special conformation of the constraining elements enables easy application to any type of two-wheeled vehicle, independently of the particular conformation of the frame thereof, while at the same time ensuring a secure and reliable support for the child seat. The fastening device 1 of the invention is thus characterized by a broad flexibility and great practicality of use.

## Claims

1. A fastening device (1) for assembling a child seat (100) on a frame (101) of a bicycle (102), said seat (100) being of the type comprising a support frame (103) engaging a seat part (104) extending substantially along a development plane (105) and a backrest (106), the device comprising:
➢ a support body (2) exhibiting at least a blocking portion (3) configured for stably engaging the support frame (103) of the seat (100) and at least a contact portion (4) configured for abutting against a portion of the frame (101) of the bicycle (102),
➢ at least a first constraining element (6) configured for constraining the support body (2) to the frame (101) of the bicycle (102), said first constraining element (6) having a first portion (7) that is movably engaged to the support body (2) and at least a second portion (8) that is engageable to a portion of the frame (101) of the bicycle (102), said first constraining element (6) being mobile with respect to the support body (2) between at least a first and at least a second operating position, **characterised in that** the first operating position and the second operating position define reciprocally angularly offset positions of the first constraining element (6).

2. The device according to claim 1, wherein the first constraining element (6) is rotatably mounted to the support body (2) and/or rotatably movable about a rotation axis (9) that is substantially parallel to the main development plane (105) of the seat part (104) and/or parallel to a substantially horizontal plane in use condition of the fastening device (1) and/or substantially perpendicular to a main development direction of the portion of the frame (101) of the bicycle (102).

3. The device according to any one of the preceding claims, wherein the support body (2) comprises a first engaging portion (5) engaging and cooperating with the first portion (7) of the first constraining element (6) and defining therewith a hinge-type constraint, the first engaging portion (5) of the support body (2) having a profile that is at least partly arched and suitable for cooperating with the first portion (7) of the first constraining element (6), which first portion (7) exhibits a profile that is at least partly arched and counter-shaped to the first engaging portion (5) and/or wherein the first engaging portion (5) of the support body (2) comprises a seating having a profile that is at least partly arched while the first portion (7) of the first constraining element (6) comprises at least a pin or at least a ball, or wherein the first engaging portion (5) of the support body (2) comprises at least a pin or at least a ball while the first portion (7) of the first constraining element (6) comprises at least a seating having a profile that is at least partly arched.

4. The device according to any one of the preceding claims, wherein the second portion (8) of the first constraining element (6) comprises at least a first tract (15) that is at least partly straight and develops between a first end (16) and a second end (17), the second portion (8) of the first constraining element (6) further comprising at least a second tract (18) that is at least partly curved and extends between a respective first end (19) and second end (20), the first tract (15) and the second tract (18) being connected to one another respectively in correspondence of said second end (17) and said first end (19) and defining a coupling seating (21) suitable for contacting at least a portion of the support frame (101) of the bicycle (102) and/or wherein the first constraining element (6) is further movable for adjusting a dimension of an engaging zone (25) suitable for accommodating at least a portion of the frame (101) of the bicycle (102) and defined between said first constraining element (6) and said support body (2) and/or wherein the first constraining element (6) is further slidingly movable with respect to the support body (2) along an adjusting direction transversal to the rotation axis (9) of the first constraining element (6) such as to vary the distance between the second tract (18) of the second portion (8) and the support body (2).

5. The device according to the preceding claim, wherein the second portion (8) of the first constraining element (6) comprises a third tract (22) at least partly straight and developing substantially parallel to said first tract between a respective first and second end (23, 24), the first end (23) of the third tract being connected with the second end (20) of the second tract (18), said first, second and third tract (15, 18, 22) being connected to one another and defining a substantially U-shaped element, and wherein the first, second and third tract (15, 18, 22) are connected to one another such as to form a single body and/or wherein at least one from among the first and third tract (15, 22) is removably and/or movably engaged to the first engaging portion (5) of the support body (2).

6. The device according to any one of the preceding claims, wherein the first constraining element (6), in engagement with said support body (2), defines an engaging zone (25) suitable for accommodating at least a portion of the frame (101) of the bicycle (102) and having a closed containing profile, and wherein a movement of the first constraining element (6) along a transversal sliding direction thereof with respect to the support body (2) determines a dimensional variation of the engaging zone (25).

7. The device according to any one of the preceding claims, comprising at least a second constraining element (26) configured for constraining the support body (2) to the frame (101) of the bicycle (102), said second constraining element (26) having a respective first portion (27) engaged to the support body (2) and a second portion (28) engageable to a portion of the frame (101) of the bicycle (102), and wherein the second constraining element (26) is movable with respect to the support body (2) or wherein the second constraining element (26) is fixed with respect to the support body (2) and/or wherein the second constraining element (26) is movable between at least a first and at least a second operating position defining positions of the second constraining element (26) that are angularly offset to one another, and wherein the second constraining element (26) is rotatably mounted on the support body (2) and/or rotatably movable about a rotation axis (29) that is substantially parallel to the main development plane (105) of the seat part (104) and/or parallel to a substantially horizontal plane in use condition of the fastening device (1) and/or substantially perpendicular to a main development direction of the portion of the frame (101) of the bicycle (102).

8. The device according to the preceding claim, wherein the rotation axis (9) of the first constraining element (6) is substantially parallel to the rotation axis (29) of the second constraining element (26) and/or wherein said first constraining element (6) and said second constraining element (26) are rotatable independently of one another and/or wherein said first constraining element (6) and/or said second constraining element (26) exhibit a substantially wire-shaped or tubular conformation.

9. The device according to any one of the preceding claims, wherein the support body (2) comprises a second engaging portion (11) engaging and cooperating with the first portion (27) of the second constraining element (26) and defining therewith a hinge-type constraint, the second engaging portion (11) of the support body (2) having an at least partly arched profile suitable for cooperating with the first portion (7) of the second constraining element (26), which first portion (7) exhibits an at least partly arched profile counter-shaped to the second engaging portion (11) of the support body (2) and/or wherein the second portion (28) of the second constraining element (26) comprises at least a first tract (30) at least partly straight and developing between a first end (30) and a second end (32), the second portion (28) of the second constraining element (26) further comprising at least a second tract (33) at least partly curved and extending between a respective first and second end (34, 35), the first and the second tract (30 33) being connected to one another respectively in correspondence of said second and first end (32, 34) and defining a coupling seating (36) suitable for contacting at least a portion of the support frame (101) of the bicycle (102), and wherein the second constraining element (26) is further slidingly movable with respect to the support body (2) along an adjustment direction transversal to the rotation axis (29) of the second constraining element (26) for varying the distance between the second tract (28) of the second portion (28) and the support body (2) and/or wherein the adjustment direction of the second constraining element (26) is parallel to the development direction of the first tract (30) of the second portion (28) of the second constraining element (26).

10. A child seat (100) for transporting persons on a bicycle (102), the bicycle being of the type comprising at least a frame (101), said seat (100) comprising:
➢ a support frame (103),
➢ at least a seat part (104) engaged to the support frame (103) and extending substantially along a development plane (105),
➢ at least a back-rest (106) extending transversally with respect to the seat part (104),
➢ at least a fastening device (1) according to any one of the preceding claims, engaged to the support frame (103) and configured for being stably constrained to the frame (101) of the bicycle (102).
